# EUROPEAN PATENT APPLICATION

(11) **EP 4 613 090 A1**
(43) Date of publication of application: **10.09.2025**
(21) Application number: 24162470.9
(22) Date of filing: 08.03.2024
(51) Int. Cl.: A01G 9/02, A01G 9/029

(54) **BIODEGRADABLE CONTAINER FOR GROWING PLANTS**

(71) Applicant: Byma Holding B.V., 6732HB Harskamp (NL)
(72) Inventor: Dunsbergen, Berend, 6732 HB Harskamp (NL)
(74) Representative: Patent Business B.V.

(57) **Abstract**

The invention relates in general to the field of agriculture and horticulture, in particular to the field of containers for growing plants. The present invention relates to a biodegradable container for growing plants, to a method for producing the biodegradable container, and to methods for increasing efficiency of a horticultural plant growing process, for increasing the quality of soil, for reducing desiccation of soil, and for reducing the need for artificial fertilizer.

## Description

### Field of the invention

The invention relates in general to the field of agriculture and horticulture, in particular to the field of containers for growing plants. The present invention relates to a biodegradable container for growing plants, to a method for producing the biodegradable container, and to methods for increasing efficiency of a horticultural plant growing process, for increasing the quality of soil, for reducing desiccation of soil, and for reducing the need for artificial fertilizer.

### Background of the invention

In modern agriculture, horticulture, greenhouse cultivation, forestry, cultural landscape, and so on, huge amounts of waste are produced. Waste is considered to relate to unwanted or unusable materials. Waste is typically a substance which is discarded after a primary use, or otherwise considered worthless. In a circular economy such waste should be avoided, or at least minimized. An example of such waste is material which is generally used for containers for growing plants.

Various types of containers for growing plants exist, such as containers made of materials which are made of synthetic materials such as plastics. Use of such materials however is not desirable, because they are highly harmful to the environment in different ways. It generates waste after use, but it is also harmful to the soil, to the air and to the nature, such as for plants and animals that come into contact with such synthetic materials. Let alone that such synthetic containers for growing plants contribute to the health of the plants or to the soil. Attempts to reduce such types of waste are known, wherein synthetic materials are replaced wherein a container comprises certain biological materials, such as wood. Although such application may have a positive impact environment-wise, it does still not contribute to the quality or health of the soil or the plant. In addition to that, the high levels of artificial fertilizers currently used remain unaffected with any of the containers for growing plants as known from the prior art, in view of the need of the plants to be grown in the said container.

In view of the drawn disadvantages, in this technical field wherein such containers for growing plants are produced, used and applied, there is a need for sustainable improvements and alternatives of currently applied materials, which are durable, firm, not harmful for nature and even having further positive effects.

The present inventor developed an improved container for growing plants and an improved method of producing the said container and various aspects thereof, which overcomes one or more of the above disadvantages, without jeopardizing functionality and advantages.

It is an object of the invention to overcome one or more limitations of the containers for growing plants of the prior art and at the very least to provide an alternative thereto.

### Summary of the invention

The present inventor developed a biodegradable container for growing plants and various aspects thereof and a method for producing the said container, which highly increased the value in terms of sustainability and recirculation of use of materials. Advantages of the present description are detailed throughout the description. References to the figures are not limiting, and are only intended to guide the person skilled in the art through details of the present invention.
The present invention relates in a first aspect to a biodegradable container (1) for growing plants, wherein the container is made of a material, wherein the material comprises at least one of digestate and a product from a manure processing process, in particular from a manure separation process, the material further comprising an added binder, in particular between 0.1 - 8 wt.% of the binder, more in particular between 0.2 - 5 wt.% of the binder, preferably between 0.25 - 4.5 wt.% of the binder, wherein the binder wt.% is based on the total weight of the container, in particular wherein the binder is selected from a binder comprising at least one of a cellulose and a cellulose derivative, in particular a binder comprising a cellulose derivative, preferably a binder comprising at least one of methyl cellulose, methyl hydroxy ethyl cellulose, carboxy methyl cellulose, hydroxy ethyl methyl cellulose, hydroxy ethyl cellulose, and hydroxy propyl cellulose. The term "digestate" as used herein refers to solid material remaining after the anaerobic digestion (fermentation) of a biodegradable feedstock. Examples of such feedstocks are industrial waste, agricultural waste, energy crops, or animal waste. In the context of the present invention the digestate is a product of anaerobic digestion of animal waste, in particular livestock manure. Anaerobic digestion of organic matter consists mainly of four phases: enzymatic hydrolysis (break down of large polymers to smaller molecules), acidogenesis (acid formation), acetogenesis (acetic acid production), and methanogenesis (CH4 production). Digestate is produced both by acidogenesis and methanogenesis. The liquid fraction constitutes up to 90% of the digestate by volume, contains 2-6% dry matter, particles <1.2 mm in size, and most of the soluble nitrogen and potassium. The solid fraction retains most of the digestate phosphorus, and contains dry matter content, such as more than 15%. The term "manure processing process", or in particular "manure separation process" as used herein refers to known processes or methods wherein manure is processed, in particular wherein the solid manure fraction (thick fraction) is separated from the liquid manure (liquid fraction). Typically, solid manure, which is the thick fraction, which is a mouldable fraction, may have a dry matter content of 20 to 65% or higher, while the liquid fraction may have a dry matter content of about 3 to 6%. The term "binder" or "binding agent" as used herein refers to a material or substance that holds other materials together to form a cohesive whole, such as mechanically, by a type of bonding, by adhesion or cohesion. Binders can be liquid or powderous substances that may harden by a chemical or physical process, such as heating and/or drying, and bind other materials into it. Preferably, the binder is applied as a powder. Preferred examples of such binders of the present invention are selected from a binder comprising at least one of a cellulose and a cellulose derivative, in particular a binder comprising a cellulose derivative, preferably a binder comprising at least one of methyl cellulose, methyl hydroxy ethyl cellulose, carboxy methyl cellulose, hydroxy ethyl methyl cellulose, hydroxy ethyl cellulose, and hydroxy propyl cellulose. Binders composed of cellulose or cellulose derivatives are environmentally friendly, in contrary to binding agents which are not, such as oil-based agents. Further advantages are that they are water solvable, biobased, and biodegradable, without negatively influencing the environment. Cellulose and cellulose derivatives can be obtained from sustainable sources such as from wood. Because of their sustainable characteristics and properties, cellulose based binders are also used in consumable products, such as food and feed. Preferably, the binder is added in amounts between 0.1 - 4 wt.%, such as between 0.15 - 3.5 wt.%, in particular between 0.15 - 2.5 wt.%. In summary, the present invention provides a sustainable solution of producing and obtaining a container for growing plants. The present invention provides a sustainable and circular way of re-using manure, in particular animal manure, in particular at least one of digestate and a product from a manure separation process. Thereby the present invention provides a solution to one or more of the above mentioned problems. It was surprisingly found, that combining the material as taught herein, with the binder as taught herein, and pressing the mixture under forces as taught herein, that it was possible to produce a biodegradable container for growing plants, which overcomes one or more limitations of the containers for growing plants of the prior art. The container is firm, sturdy, solid, and able to be stacked and transported.

In a second aspect, the present invention relates to a method for producing the container for growing plants as taught herein, the method comprising providing the material into a mold for a container for growing plants, pressing the material, and removing the container from the mold. The term "mold" as used herein refers to a hollow holder or a hollow shape, with the shape of the biodegradable container (1), configured to hold and enclose the biodegradable container. It needs to hold the material for the container before the material will be pressed, and needs to be solid and firm enough to withstand the force exerted on the container during pressing. In particular when is pressed with necessary forces between 0.2 - 1000 MPa, in particular between 0.3 - 750 MPa, more in particular between 0.4 - 500 MPa, more in particular between 0.5 - 250 MPa. The term MPa (Megapascal) as used herein can be expressed in tons per square centimeter. If a container for growing plants is produced and is pressed with 10 tons on a surface of 25 square centimeters, this corresponds to about 39 MPa. If a container for growing plants is produced and is pressed with 200 tons on a surface of 25 square centimeters, this corresponds to about 785 MPa. If a container for growing plants is produced and is pressed with 300 tons on a surface of 1600 square centimeters, this corresponds to about 18 MPa.

In a third aspect, the present invention relates to a method for increasing efficiency of a horticultural plant growing process, comprising applying the container as taught herein into the horticultural plant growing process. The term "horticultural plant growing process" as used herein is known to the skilled person, and comprise processes of growing plants from seed to adult plant, including the particular stages of development in between. Such processes are time and energy demanding, as between different stages of plant development plant containers may need to be changed, removed, replaced, and/or cleaned. By using the plant container of the present disclosure, the container material is dissolved and absorbed into the soil and its organic compounds and/or nutrients are utilized by the plant grown into the plant container. As a result, there is no need to change, remove, replace or clean the plant container during the plant growing process, which is an advantage.

In a fourth aspect, the present invention relates to a method for increasing the quality of soil, comprising applying the container as taught herein into a plant growing method, wherein the container is put in the soil, in particular wherein the quality is increased by at least one of improving the soil structure and increasing the amount of nutrients in the soil. The term "improving the soil structure" as used herein refers to the arrangement of the solid parts of the soil and of the pore space located between them. It is determined by how individual soil granules clump or bind together, and aggregate, resulting in the arrangement of soil pores which may be bigger or smaller. Soil has a major influence on water and air movement, biological activity, root growth and seedling emergence. Benefits of improving soil structure, in particular for the growth of plants, particularly in an agricultural setting, comprise reduced erosion due to greater soil aggregate strength and decreased overland flow, improved root penetration and access to soil moisture and nutrients, improved emergence of seedlings due to reduced crusting of the surface, and greater water infiltration, retention and availability due to improved porosity. It may also happen that a soil structure that aggregates not well enough because a reduced soil aggregate strength and pores that are too big. That makes that water leaches out and the soil will become too dry.

In a fifth aspect, the present invention relates to a method for reducing desiccation of soil, comprising applying the container as taught herein into a plant growing method, wherein the container is put in the soil. The term "desiccation" as used herein refers to a further effect of a deteriorated soil structure, in a way that the soil is not able to hold an amount of water which is necessary for plants to grow, live and survive. Desiccation refers to a state of dryness of the soil, wherein water leaches out and cannot be held by the soil structure. Application of the container as taught herein into a plant growing method reduces the said desiccation of the soil as a result of improved soil structure.

In a sixth aspect, the present invention relates to a method for reducing the need for artificial fertilizer, comprising applying the container as taught herein into a plant growing method. The term "artificial fertilizer" as used herein refers to types of fertilizers which are known to the skilled person. The use of artificial fertilizers may cause environmental consequences such as water pollution and eutrophication due to nutritional runoff, as well as carbon and other emissions from fertilizer production, and contamination and pollution of soil. As the container of the present invention is a biodegradable and sustainable alternative to the plant growth containers commonly used, the present invention may further enhance sustainable-agriculture practices which can be implemented to reduce the adverse environmental effects of fertilizer and pesticide use as well as other environmental damage caused by industrial agriculture.

The present invention provides a solution to one or more of the above mentioned problems and overcomes drawbacks of the prior art.

### Detailed description of the invention

In an exemplary embodiment of the present biodegradable container, the material comprises >40 wt.% of the at least one of digestate and the product from a manure processing process, in particular from a manure separation process, in particular >60 wt.%, more in particular >80 wt.%, more in particular >95 wt.% of the at least one of digestate and the manure separation product.

In an exemplary embodiment of the present biodegradable container, the at least one of the digestate and the product from a manure processing process, in particular from a manure separation process is selected from at least one of a thick fraction of the digestate, in particular wherein the digestate is the product of a fermentation process of manure, and the thick fraction of the product from a manure processing process, in particular from a manure separation process, in particular wherein the manure is animal manure, preferably selected from animal manure from at least one of cattle, pig and poultry. In particular at least one of the thick fraction of the digestate and the thick fraction of the product from a manure processing process, in particular from a manure separation process, is a mouldable thick fraction.

In an exemplary embodiment of the present biodegradable container, the material further comprises 0-8 wt.% of at least one separately added plant nutrient in predefined amounts relative to the need of the plant to be grown in the container, in particular 0.5 - 5 wt.%, in particular wherein the at least one separately added plant nutrient is selected from at least one of macronutrients, in particular at least one of nitrogen (N), phosphorus (P), potassium (K), calcium (Ca), sulfur (S), magnesium (Mg), carbon (C), and hydrogen (H), and micronutrients, in particular at least one of iron (Fe), boron (B), chlorine (Cl), manganese (Mn), zinc (Zn), copper (Cu), molybdenum (Mo), and nickel (Ni).

In an exemplary embodiment of the present biodegradable container, the container has a bottom (2) and at least one wall (3) on at least one side of the bottom, wherein the at least one wall encloses an open space (4) at the inside of the container for growing plants, the open space surrounded by the at least one wall and the bottom, and wherein the container is open at one side of the container, opposite to the bottom, in particular wherein the open space has a volume enclosed by the container, wherein the volume is between 10 cm³ - 50 dm³, in particular between 15 cm³ - 30 dm³, more in particular between 20 cm³ - 10 dm³.

In an exemplary embodiment of the present biodegradable container, the bottom has a thickness (t1) of between 0.5 - 5 cm, preferably between 0.6 - 4 cm.

In an exemplary embodiment of the present biodegradable container, the at least one wall has a thickness (t2) of between 0.5 - 5 cm, preferably between 0.6 - 4 cm.

In an exemplary embodiment of the present biodegradable container, the longest cross-section (c) of the open space, measured perpendicular to the at least one wall, is between 1 -100 cm, in particular between 1,5 - 40 cm, in particular between 2-20 cm.

In an exemplary embodiment of the present biodegradable container, the container has a height (h) of between 4-50 cm, in particular between 5 - 25 cm, more in particular between 6-20 cm.

In an exemplary embodiment of the present biodegradable container, the container has at least one of a width (w) and a depth (d) of between 4 - 100 cm, in particular between 5 - 50 cm, more in particular between 5 - 25 cm.

In an exemplary embodiment of the present biodegradable container, the material of the container has a mass of between 15 - 500 grams, in particular of between 20 - 350 grams, more in particular of between 25 - 200 grams.

In an exemplary embodiment of the present biodegradable container, the material of the container has a volume of between 50 cm³ and 16 dm³.

In an exemplary embodiment of the present biodegradable container, the material of the container has a mass (g) : volume (cm³) ratio of between 1:3,3 to 1:32.

In an exemplary embodiment of the present biodegradable container, the container has a shape selected from a square shape, a rectangular shape, and a cylindrical shape, preferably a cylindrical shape, in particular wherein the area (5) of the upper surface, enclosed by the outer sides (s) of the at least one wall (3), opposite to the bottom-side (2), is between 16 and 1600 cm², in particular between 20 and 1000 cm².

In an exemplary embodiment of the present biodegradable container, the moisture content of the material is less than 15 wt.%, in particular less than 10 wt.%, more in particular less than 5 wt.%, preferably less than 3 wt.%.

In an exemplary embodiment of the present method, the method comprises pre-drying the material before pressing the material.

In an exemplary embodiment of the present method, the pre-drying is performed during a pre-drying time of between 5 minutes and 24 hours, in particular between 10 minutes and 8 hours.

In an exemplary embodiment of the present method, the pre-drying is performed at a pre-drying temperature of between 20 and 150 degrees Celsius, in particular between 25 and 100 degrees Celsius.

In an exemplary embodiment of the present method, the pre-drying is performed by at least one of an infrared dryer, a vacuum dryer, a drying tunnel system, a fluid bed dryer, and a belt dryer.

In an exemplary embodiment of the present method, the mold has at least one opening, configured to release moisture from the material to the outside of the mold during pressing, in particular wherein the at least one opening comprises a filter material for allowing the moisture to pass through the at least one opening and preventing the material to pass through the at least one opening.

In an exemplary embodiment of the present method, the method comprises post-drying the container after removing the container from the mold.

In an exemplary embodiment of the present method, the material further comprises 0-8 wt.% of at least one separately added plant nutrient in predefined amounts relative to the need of the plant to be grown in the container, in particular 0.5 - 5 wt.%, in particular wherein the at least one separately added plant nutrient is selected from at least one of macronutrients, in particular at least one of nitrogen (N), phosphorus (P), potassium (K), calcium (Ca), sulfur (S), magnesium (Mg), carbon (C), and hydrogen (H), and micronutrients, in particular at least one of iron (Fe), boron (B), chlorine (Cl), manganese (Mn), zinc (Zn), copper (Cu), molybdenum (Mo), and nickel (Ni).

In an exemplary embodiment of the present method, the method comprises mixing the provided material before at least one of pre-drying and pressing the material, in particular wherein mixing of the material is performed during a mixing time of between 2 and 120 minutes, in particular of between 5 and 60 minutes, in particular wherein the mixing is performed with a shaftless screw.

In an exemplary embodiment of the present method, the pressing is performed during a pressing time of between 4 seconds and 5 minutes, in particular between 7 seconds and 3 minutes.

In an exemplary embodiment of the present method, the pressing is performed with a pressure between 0.2 - 1000 MPa, in particular between 0.3 - 750 MPa, more in particular between 0.4 - 500 MPa, more in particular between 0.5 - 250 MPa.

In an exemplary embodiment of the present method, the post-drying is performed during a post-drying time of between 5 minutes and 24 hours, in particular between 10 minutes and 8 hours.

In an exemplary embodiment of the present method, the post-drying is performed at a post-drying temperature of between 20 and 150 degrees Celsius, in particular between 25 and 100 degrees Celsius.

In an exemplary embodiment of the present method, the post-drying is performed by at least one of an infrared dryer, a vacuum dryer, a drying tunnel system, a fluid bed dryer, and a belt dryer, in particular wherein the post-drying is performed by a belt dryer.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### Figures

An embodiment of the invention will now be described, by way of example only, with reference to the accompanying schematic figure in which corresponding reference symbols indicate corresponding parts.
Figures 1a-c show schematic representations of embodiments of the biodegradable container of the present invention in different three-dimensional shapes.
Figure 2 shows a side view of the embodiments of figure 1, after being sectioned through intersection line `is'.
Figure 3a-c show top views of the embodiments of figure 1, from the direction of the open upper-side of the container, into the direction of the bottom-side.
Figure 4a-c show top views of the embodiments of figure 1 and 3 to illustrate the area enclosed by the outer-sides of the container walls.
Figure 5 shows an example of a method for producing the container for growing plants of the present invention.
Figure 6a-c show stages of drying a container for growing plants, without binder.
Figure 7a-b show containers for growing plants of the present invention.

### Detailed description of the figures

In the figures:
1 biodegradable container
2 container bottom
3 container wall
4 open space at the inside of the container
5 area of the upper surface, enclosed by the outer side (s) of the at least one wall (3), opposite to the bottom-side (2)
6 digestate or a product from a manure processing process, such as thick fraction
7 roller or divider
8 dryer system for optionally pre-drying
9 press for pressing the container for growing plants
10 pressed container for growing plants
11 dryer system for post-drying
12 leftover material after pressing
13 re-use loop of leftover material
t1 thickness of the container bottom (2)
t2 thickness of the container wall (3)
c cross section of open space (4)
h height of the container
w width of the container
d depth of the container
s outer side of the at least one wall (3)
is intersection

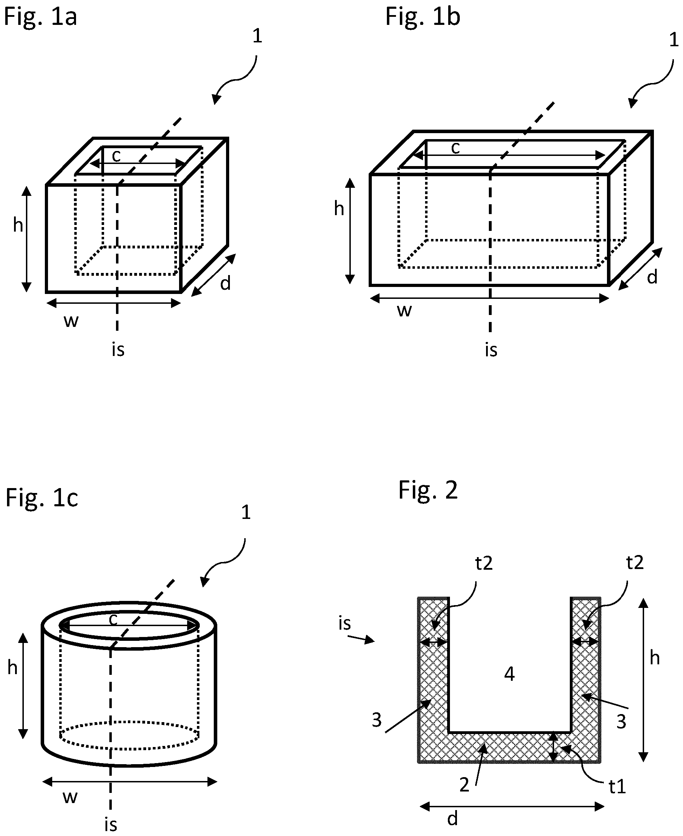

Figures 1a-c show schematic representations of embodiments of the biodegradable container of the present invention in different three-dimensional shapes. Figures 1a, 1b and 1c show the biodegradable container (1) of the present invention, wherein the embodiment of figure 1a has a square shape, the embodiment of figure 1b has a rectangular shape, and the embodiment of figure 1c has a cylindrical shape. The container has a bottom (2) and at least one wall (3) on at least one side of the bottom. Figure 1a-c demonstrates this three-dimensionally, while figure 2 demonstrates this with an intersectional side-view. In the figures, the walls (3) are shown perpendicular in view of the bottom (3). This however, is not essential, the walls may also be placed under certain angle in view of the bottom, such as an angle lower or higher than 90 degrees. In an embodiment the angle between the at least one wall (3) and the bottom (2), at the inside of the container is higher than 90 degrees, such as 95 or 100 degrees, or higher. In an embodiment the angle between the at least one wall (3) and the bottom (2), at the inside of the container is lower than 90 degrees, such as 85 or 80 degrees or lower. The at least one wall encloses an open space (4) at the inside of the container for growing plants. The open space is surrounded by the at least one wall and the bottom, and the container is open at one side of the container, which is the upper-side, opposite to the bottom. These open upper sides are the upper sides in figure 1a-c. The open space has a certain length, which is shown as the cross-section (c). When the container has a square shape (fig. 1a) or a cylindrical shape (fig. 1c) the cross section (c) measured perpendicular to the at least one wall of the particular container has one value, such as in centimeters. When the container has a rectangular shape (fig. 1b), the length of a cross section measured perpendicular to the at least one wall can have two different values: one cross section measured parallel to the width of the container, and one cross section measured parallel to the depth of the container. Therefore, in view of the present invention the term `longest cross section' is used. The open space, wherein cross sections measured perpendicular to the at least one wall are possible with different lengths, the present invention is thus defined in view of the longest cross section. The longest cross-section (c) of the open space, measured perpendicular to the at least one wall, is in an embodiment between 1 -100 cm. Preferably the longest cross section is 1,5 - 40 cm, in particular between 2-20 cm. The container has a height (h) and a width (w). When the container is non-cylindrical, such as square-shaped, or rectangular-shaped, the container has also a depth (d). Obviously, a cylindrical shaped container, from one particular stand point has also a width (w) as well as a depth (d). However it will be understood that the width of a cylinder shaped container as shown in fig. 1c, and thus the width of a circle, has a width which automatically is also the depth, no matter how you rotate the circle. The height (h) is in an embodiment between 4 - 50 cm, in particular between 5 - 25 cm, more in particular between 6-20 cm. At least one of the width (w) and the depth (d) are in an embodiment between 4 - 100 cm, in particular between 5-50 cm, more in particular between 5 - 25 cm. In figures 1a-c a dotted line is shown, demonstrating an intersection (is) which is made, as a cross section through the container as a whole, in order to demonstrate the different elements from a side view in figure 2.

Figure 2 shows a side view of the embodiments of figure 1, after being sectioned through intersection line `is'. It is shown that the container (1) has a bottom (2) and at least one wall (3) on at least one side of the bottom. The term `at least one wall' is used because, when the container has a shape such as a square or a rectangle, the container has four walls. When the container has a shape such as a cylinder, such as in fig. 1c, the container has in fact one wall, but a circular one, enclosing an open space (4). The at least one wall encloses an open space (4) at the inside of the container for growing plants, the open space surrounded by the at least one wall and the bottom. The container is open at one side of the container, opposite to the bottom. The open space (4) has in a volume enclosed by the container, wherein the volume is in an embodiment between 10 cm³ - 50 dm³, in particular between 15 cm³ - 30 dm³, more in particular between 20 cm³ - 10 dm³. The container (1) has a bottom (2) with a thickness (t1). The bottom thickness t1 is in an embodiment between 0.5 - 5 cm, preferably between 0.6 - 4 cm. The at least one wall (3) has a thickness (t2). The thickness t2 is in an embodiment between 0.5 - 5 cm, preferably between 0.6 - 4 cm. The material of the container has in an embodiment a mass of between 15 - 500 grams, in particular of between 20 - 350 grams, more in particular of between 25 - 200 grams. This obviously concerns the material of the container as such, an empty container, such as demonstrated in fig. 2. The material of the said empty container has in an embodiment a volume of between 50 cm³ and 16 dm³, preferably between 55 cm³ and 12 dm³, more preferably between 60 cm³ and 5 dm³. The material of the container has in an embodiment a mass (g) : volume (cm³) ratio of between 1:3.3 to 1:32.

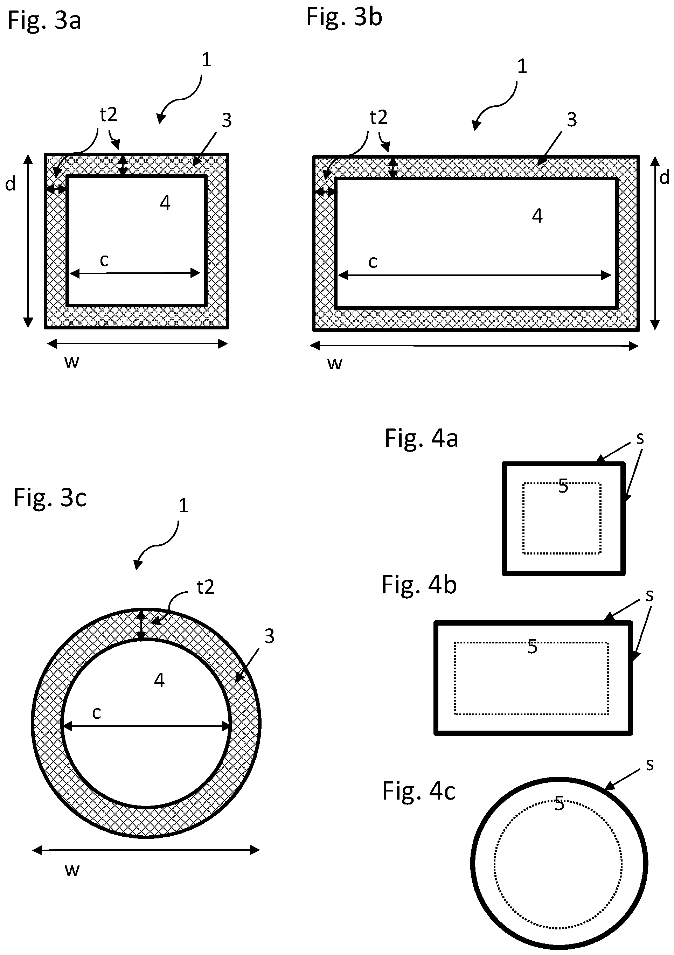

Figure 3a-c show top views of the embodiments of figure 1, from the direction of the open upper-side of the container (1), into the direction of the bottom-side. It is further demonstrated what is explained under figures 1 and 2. Figure 3a shows a top view of a square shaped container (1). Figure 3b shows a top view of a rectangular shaped container (1). Figure 3c shows a top view of a cylindrical shaped container (1). The containers of fig. 3a-c have a width (w) and a depth (d). The at least one container wall (3) has a thickness (t2). The at least one wall (3) and the bottom (2) enclose an open space (4). The open space has a longest cross section (c).

Figure 4a-c show top views of the embodiments of figure 1 and 3 to illustrate the area of the upper surface, enclosed by the outer-sides of the container walls. In figures 4a-c it is demonstrated and clarified that containers of any shape, such as a square shape (fig. 4a), a rectangular shape (fig. 4b) or a cylindrical shape (fig. 4c), have an area of the upper surface, enclosed by the outer sides (s) of the at least one wall (3). The upper surface is at the top side of the container, opposite to the bottom-side (2). The outer sides (s) are shown by the outline of the shapes, thus the thick lines (s). These outer sides (s) enclose an area (5). The area (5) is in an embodiment between 16 and 1600 cm², in particular between 20 and 1300 cm², more in particular between 24 and 1000 cm².

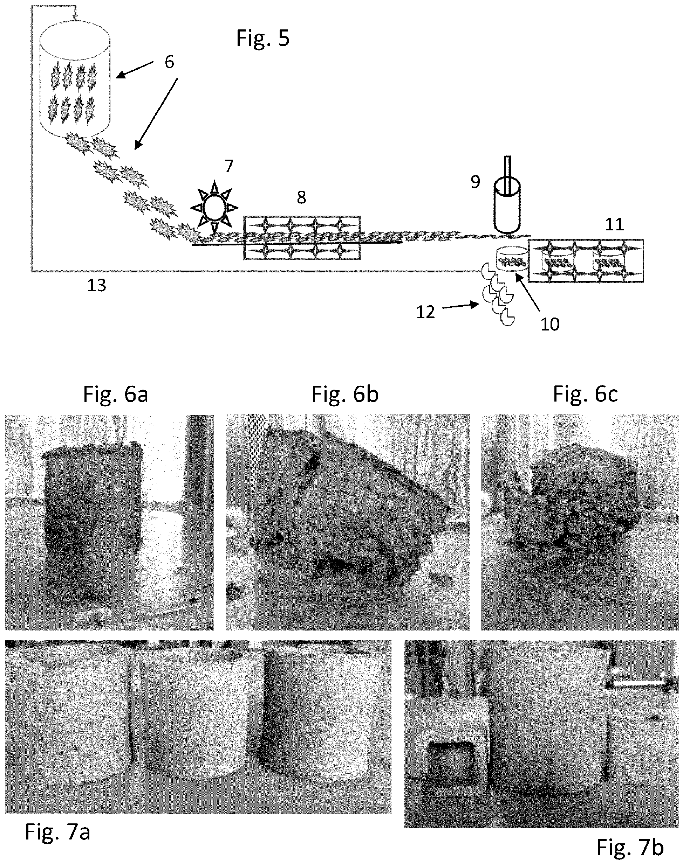

Figure 5 shows an example of a method for producing the container for growing plants of the present invention. The method starts at the left side in figure 5 where the material, which is digestate or a product from a manure processing process, such as thick fraction from manure separation (6), is stored. The material is transported, such as by a conveyor belt system and may pass through systems like one or more mixers, rollers or dividers (7). In an embodiment the material can be pre-dried by a pre-dryer system (8). The material is further transported to a press for pressing the container for growing plants (9). This leads to the pressed container for growing plants (10) as well as some leftover material (12) which is created through the pressing step, and which is collected, by a collecting means, such as by the machine itself, or by other means able to collect the leftover material. If after pressing the moisture content is such, that post-drying is needed, the pressed container (10) is transported into a dryer system for post-drying (11). The resulting container is firm, sturdy, solid, and able to be stacked and transported.

Figure 6a-c show stages of drying a container for growing plants, without using a binder. As further described in Example 1, the container for growing plants, before drying, which container was still moist and weak, is shown in figure 6a. During the drying process however, five seconds after starting the drying process, the container started to collapse and to deform, which is demonstrated in figure 6b, which figure was taken five seconds after the start. Ten seconds after the start of the drying process already, the container was fully collapsed and fully deformed, which is demonstrated in figure 6c.

Figure 7a-b show containers for growing plants of the present invention. The container is firm, sturdy, solid, and able to be stacked and transported. Figure 7a show three containers wherein the bottom surfaces have a round shape. Figure 7b shows in addition to one example with a round, circular bottom surface (container in the middle of figure 7b), two examples of containers with a square shape.

### EXAMPLES

### Example 1

As a comparative example, a thick fraction material from a manure processing process was provided, wherein the thick fraction was obtained after being separated from the liquid manure fraction. A container for growing plants with a round shape of about 427 grams was pressed using a mold, with a pressure of about 12.5 MPa. As the product was still wet and weak, it was put in a dryer system. The container for growing plants, before drying, which container was still moist and weak, is shown in figure 6a. During the drying process however, five seconds after starting the drying process, the container started to collapse and to deform, which is demonstrated in figure 6b, which figure was taken five seconds after the start. Ten seconds after the start of the drying process already, the container was fully collapsed and fully deformed, which is demonstrated in figure 6c.

### Example 2

As a non-limiting example, a thick fraction material from a manure processing process was provided, wherein the thick fraction was obtained after being separated from the liquid manure fraction. An amount of a cellulose-based binder was added to and mixed through the said thick fraction, in this example a methyl-cellulose based binder, in an amount of 4 wt.%, based on the total weight of the container. A container for growing plants with a round shape of about 427 grams of the mixture was pressed using a mold, with a pressure of about 12.5 MPa. Thereafter, in order to remove the moist from the product, it was put in a dryer system. During the drying process however, the container comprising the binder material, surprisingly did not change as happened in example 1, but it remained firm, and even became very sturdy, solid, and able to be stacked and transported. The container in this particular example had lost about 66 wt.% of its weight during drying, leading to a firm container of about 144 grams, with a moisture content of less than 5 wt.%, even less than 3 wt.%. Such final product is demonstrated in figure 7a. Further examples of the final product of the present invention are shown in figure 7b.

## Claims

1. A biodegradable container (1) for growing plants, wherein the container is made of a material, wherein the material comprises at least one of digestate and a product from a manure processing process, in particular from a manure separation process, the material further comprising an added binder, in particular between 0.1 - 8 wt.% of the binder, more in particular between 0.2 - 5 wt.% of the binder, wherein the binder wt.% is based on the total weight of the container, in particular wherein the binder is selected from a binder comprising at least one of a cellulose and a cellulose derivative, in particular a binder comprising a cellulose derivative.

2. The container for growing plants according to claim 1, wherein the material comprises >40 wt.% of the at least one of digestate and the product from a manure processing process, in particular >60 wt.%, more in particular >80 wt.%, more in particular >95 wt.% of the at least one of digestate and the manure processing product.

3. The container for growing plants according to claim 1 or 2, wherein the at least one of the digestate and the product from a manure processing process is selected from at least one of a thick fraction of the digestate, in particular wherein the digestate is the product of a fermentation process of manure, and the thick fraction of the product from a manure processing process, in particular wherein the manure is animal manure, preferably selected from animal manure from at least one of cattle, pig and poultry.

4. The container for growing plants according to any of claims 1-3, wherein the material further comprises 0-8 wt.% of at least one separately added plant nutrient in predefined amounts relative to the need of the plant to be grown in the container, in particular 0.5 - 5 wt.%, in particular wherein the at least one separately added plant nutrient is selected from at least one of macronutrients, in particular at le ast one of nitrogen (N), phosphorus (P), potassium (K), calcium (Ca), sulfur (S), magnesium (Mg), carbon (C), and hydrogen (H), and micronutrients, in particular at least one of iron (Fe), boron (B), chlorine (Cl), manganese (Mn), zinc (Zn), copper (Cu), molybdenum (Mo), and nickel (Ni).

5. The container for growing plants according to any of claims 1-4, wherein the container has a bottom (2) and at least one wall (3) on at least one side of the bottom, wherein the at least one wall encloses an open space (4) at the inside of the container for growing plants, the open space surrounded by the at least one wall and the bottom, and wherein the container is open at one side of the container, opposite to the bottom, in particular wherein the open space has a volume enclosed by the container, wherein the volume is between 10 cm³ - 50 dm³, in particular between 15 cm³ - 30 dm³, more in particular between 20 cm³ - 10 dm³.

6. The container for growing plants according to any of claims 1-5, wherein the bottom has a thickness (t1) of between 0.5 - 5 cm, and/or
wherein the at least one wall has a thickness (t2) of between 0.5 - 5 cm, and/or
wherein the longest cross-section (c) of the open space, measured perpendicular to the at least one wall, is between 1 -100 cm, in particular between 1,5 - 40 cm, in particular between 2-20 cm, and/or
wherein the container has a height (h) of between 4-50 cm, in particular between 5 - 25 cm, more in particular between 6-20 cm, and/or
wherein the container has at least one of a width (w) and a depth (d) of between 4 - 100 cm, in particular between 5 - 50 cm, more in particular between 5 - 25 cm, and/or
wherein the material of the container has a mass of between 15 - 500 grams, in particular of between 20 - 350 grams, more in particular of between 25 - 200 grams, and/or
wherein the material of the container has a volume of between 50 cm³ and 16 dm³, and/or
wherein the material of the container has a mass (g) : volume (cm³) ratio of between 1:3,3 to 1:32, and/or
wherein the container has a shape selected from a square shape, a rectangular shape, and a cylindrical shape, preferably a cylindrical shape, in particular wherein the area (5) of the upper surface, enclosed by the outer sides (s) of the at least one wall (3), opposite to the bottom-side (2), is between 16 and 1600 cm², in particular between 20 and 1000 cm², and/or
wherein the moisture content of the material is less than 15 wt.%, in particular less than 10 wt.%, more in particular less than 5 wt.%.

7. A method for producing the container for growing plants according to any of claims 1-6, the method comprising
- providing the material into a mold for a container for growing plants,
- pressing the material, and
- removing the container from the mold.

8. The method according to claim 7, the method comprising pre-drying the material before pressing the material.

9. The method according to claim 8, wherein pre-drying is performed during a pre-drying time of between 5 minutes and 24 hours, in particular between 10 minutes and 8 hours, and/or
wherein the pre-drying is performed at a pre-drying temperature of between 20 and 150 degrees Celsius, in particular between 25 and 100 degrees Celsius, and/or
wherein the pre-drying is performed by at least one of an infrared dryer, a vacuum dryer, a drying tunnel system, a fluid bed dryer, and a belt dryer, and/or
wherein the mold has at least one opening, configured to release moisture from the material to the outside of the mold during pressing, in particular wherein the at least one opening comprises a filter material for allowing the moisture to pass through the at least one opening and preventing the material to pass through the at least one opening.

10. The method according to any of claims 7-9, the method comprising post-drying the container after removing the container from the mold.

11. The method according to any of claims 7-10, wherein the material further comprises 0-8 wt.% of at least one separately added plant nutrient in predefined amounts relative to the need of the plant to be grown in the container, in particular 0.5 - 5 wt.%, in particular wherein the at least one separately added plant nutrient is selected from at least one of macronutrients, in particular at least one of nitrogen (N), phosphorus (P), potassium (K), calcium (Ca), sulfur (S), magnesium (Mg), carbon (C), and hydrogen (H), and micronutrients, in particular at least one of iron (Fe), boron (B), chlorine (Cl), manganese (Mn), zinc (Zn), copper (Cu), molybdenum (Mo), and nickel (Ni).

12. The method according to any of claims 7-11, the method comprising mixing the provided material before at least one of pre-drying and pressing the material, in particular wherein mixing of the material is performed during a mixing time of between 2 and 120 minutes, in particular of between 5 and 60 minutes, in particular wherein the mixing is performed with a shaftless screw.

13. The method according to any of claims 7-12, wherein pressing is performed during a pressing time of between 4 seconds and 5 minutes, in particular between 7 seconds and 3 minutes, and/or
wherein pressing is performed with a pressure between 0.2 - 1000 MPa, in particular between 0.3 - 750 MPa, more in particular between 0.4 - 500 MPa, more in particular between 0.5 - 250 MPa.

14. The method according to any of claims 10-13, wherein the post-drying is performed during a post-drying time of between 5 minutes and 24 hours, in particular between 10 minutes and 8 hours, and/or
wherein the post-drying is performed at a post-drying temperature of between 20 and 150 degrees Celsius, in particular between 25 and 100 degrees Celsius, and/or
wherein the post-drying is performed by at least one of an infrared dryer, a vacuum dryer, a drying tunnel system, a fluid bed dryer, and a belt dryer, in particular wherein the post-drying is performed by a belt dryer.

15. Method for increasing efficiency of a horticultural plant growing process, comprising applying the container according to any of claims 1-6 into the horticultural plant growing process, and/or
for increasing the quality of soil, comprising applying the container according to any of claims 1-6 into a plant growing method, wherein the container is put in the soil, in particular wherein the quality is increased by at least one of improving the soil structure and increasing the amount of nutrients in the soil, and/or
for reducing desiccation of soil, comprising applying the container according to any of claims 1-6 into a plant growing method, wherein the container is put in the soil, and/or
for reducing the need for artificial fertilizer, comprising applying the container according to any of claims 1-6 into a plant growing method.
